# FASCICULE DE BREVET EUROPEEN

(11) **EP 2 378 927 B1**
(45) Date de publication et mention de la délivrance du brevet: **03.04.2013**
(21) Numéro de dépôt: 09756028.8
(22) Date de dépôt: 15.10.2009
(51) Int. Cl.: A47F 11/10, G01M 11/02, A47F 7/02

(54) **DISPOSITIF DE DEMONSTRATION ET DE TEST DE L'EFFICACITE D'UN TRAITEMENT ANTI REFLET D'UNE LENTILLE OPHTALMIQUE**
VORRICHTUNG ZUM NACHWEIS UND ZUM PRÜFEN DER WIRKSAMKEIT EINER ENTSPIEGELUNGSBEHANDLUNG EINER OPHTHALMISCHEN LINSE
DEVICE FOR DEMONSTRATING AND TESTING THE EFFECTIVENESS OF AN ANTI-REFLECTIVE TREATMENT OF AN OPHTHALMIC LENS

(30) Priorité: 15.01.2009 FR 0950195
(43) Date de publication de la demande: 26.10.2011
(73) Titulaire: Essilor International (Compagnie Générale d'Optique), 94220 Charenton-le-Pont (FR)
(72) Inventeur: CALANDRINI, Fabien, F-94220 Charenton-le-Pont (FR); NADOLNY, Carole, F-94220 Charenton-le-Pont (FR); FAUQUIER, Catherine, F-94220 Charenton-le-Pont (FR)
(74) Mandataire: Lenne, Laurence
(86) Numéro de dépôt international: PCT/FR2009/051963
(87) Numéro de publication internationale: WO 2010/081945

(56) Documents cités:
- EP-A- 1 174 061
- WO-A-2008/023134
- WO-A-2008/047045
- DE-A1-102007 028 364
- US-A- 2 697 380
- US-A- 3 047 966
- US-A- 3 729 839
- US-A- 3 970 369
- US-A- 4 505 683
- US-A- 5 532 877
- RUDOLF KINGSLAKE: "Applied Optics and Optical Engineering, Volume V, Part II" 1969, ACADEMIC PRESS , LONDON , XP002541321 page 122; figure 6
- "OPHTHALMIC OPTICS - UNCUT FINISHED SPECTACLE LENSES - PART 4: SPECIFICATIONS AND TEST METHODS FOR ANTI-REFLECTIVE COATINGS" INTERNATIONAL STANDARD - ISO, ZUERICH, CH, vol. 8980-4, 15 août 2006 (2006-08-15), page COMPLETE, XP001247649

## Description

L'invention concerne un dispositif de démonstration et de test comparatif de l'efficacité d'un traitement antireflet d'une lentille ophtalmique.

Il existe des dispositifs de mesure des propriétés optiques d'un traitement anti reflet au moyen d'un système de mesure de réflexion de type spectromètre complexe. Ces propriétés optiques sont la réflexion moyenne Rₘ, la réflexion visuelle Rᵥ, la chroma C et l'angle de teinte h.

Il existe également un procédé de démonstration de l'efficacité d'un traitement antireflet grâce auquel la performance d'une lentille pourvue d'un traitement antireflet est comparée à une lentille dépourvue d'un tel traitement, au moyen d'une image droite et d'une image gauche réfléchies sur des lentilles ophtalmiques droite et gauche portées par un porteur au moyen d'une monture de lunettes et dont l'une est donc pourvue d'un traitement anti reflet et l'autre dépourvue d'un tel traitement. Le reflet de ces images est visualisé par le porteur lorsqu'il se regarde dans un miroir central ou bien par un observateur. Le porteur ou l'observateur compare la différence d'efficacité d'antireflet entre les deux lentilles.

Ce type de procédé n'est lié à aucun protocole et est donc relativement imprécis et aléatoire dans la mesure où il dépend des conditions d'observation.

Le document de brevet US 3 729 839 décrit un dispositif de démonstration de lunettes comportant une lampe et un miroir et le document de brevet WO 2008/047045 concerne un dispositif de démonstration et de test comparatif de l'efficacité d'un traitement antireflet d'une lentille ophtalmique comportant une lampe.

L'invention propose un dispositif de démonstration et de test comparatif de l'efficacité de deux traitements antireflets déposés sur des lentilles ophtalmiques. Ce dispositif est simple à utiliser, peut servir tout autant de démonstrateur pour opticiens que de matériel d'instrumentation et peut être utilisé aisément par une personne béotienne. Ce dispositif permet d'évaluer des différences de réflexion" visuelle Rᵥ entre deux antireflets inférieures à 0,5%.

Pour ce faire, l'invention propose un dispositif de démonstration et de test comparatif de l'efficacité d'un traitement antireflet d'une lentille ophtalmique comportant une image et un miroir, caractérisé en ce qu'il comporte une pièce comportant une première face de support de ladite image, une deuxième face de support du dit miroir sensiblement perpendiculaire à ladite première face et une troisième face de positionnement d'au moins une lentille ophtalmique, située en face de ladite deuxième face et pourvue d'un agencement de positionnement de ladite lentille comprenant au moins un orifice agencé sur ladite troisième face, en face dudit miroir de sorte que, lorsqu'un utilisateur regarde au travers dudit orifice, il visualise le reflet résultant de ladite image sur ladite lentille au moyen dudit miroir.

Selon un premier mode de réalisation préféré de l'invention, ladite pièce est un profilé en U, dont les branches sont constituées de ladite deuxième face et de ladite troisième face.

Selon un second mode de réalisation préféré de l'invention, ladite pièce est un cylindre fermé, dont les disques de fond constituent ladite deuxième face et ladite troisième face.

L'invention concerne également une utilisation d'un dispositif selon le second mode de réalisation, consistant à positionner une lentille pourvue sur une première moitié d'un premier traitement antireflet et pourvue sur une seconde moitié d'un second traitement antireflet, sur ledit orifice, avec sa face concave tournée vers l'extérieur, à regarder de façon monoculaire au travers de la lentille et à visualiser le reflet résultant à l'aide dudit miroir, pour comparer le niveau de réflexion du reflet de ladite réfléchie sur ladite première moitié et sur ladite seconde moitié réfléchies.

L'invention concerne enfin une utilisation d'un dispositif selon le premier mode de réalisation, consistant à positionner une lentille pourvue d'un premier traitement anti reflet sur l'un des orifices et une autre lentille pourvue d'un second traitement anti reflet sur l'autre des orifices, avec leur face concave tournée vers l'extérieur, à regarder de façon binoculaire au travers des deux lentilles et à visualiser le reflet résultant à l'aide dudit miroir, pour comparer le niveau de réflexion du reflet de ladite image réfléchie sur chacune des lentilles.

L'invention est décrite ci-après plus en détail à l'aide de figures ne représentant que des modes de réalisation préférés de l'invention.
La figure 1 est une vue en perspective d'un dispositif de démonstration et de test de l'efficacité d'un traitement antireflet d'une lentille ophtalmique conforme à un premier mode de réalisation de l'invention.
La figure 2 est une vue en coupe transversale de ce dispositif conforme à un premier mode de réalisation de l'invention.
La figure 3 est une vue en perspective éclatée d'un dispositif de démonstration et de test de l'efficacité d'un traitement antireflet d'une lentille ophtalmique conforme à un second mode de réalisation de l'invention.
La figure 4 est une vue en perspective de ce dispositif conforme à un second mode de réalisation de l'invention.
La figure 5 est une vue en coupe longitudinale de ce dispositif conforme à un second mode de réalisation de l'invention.

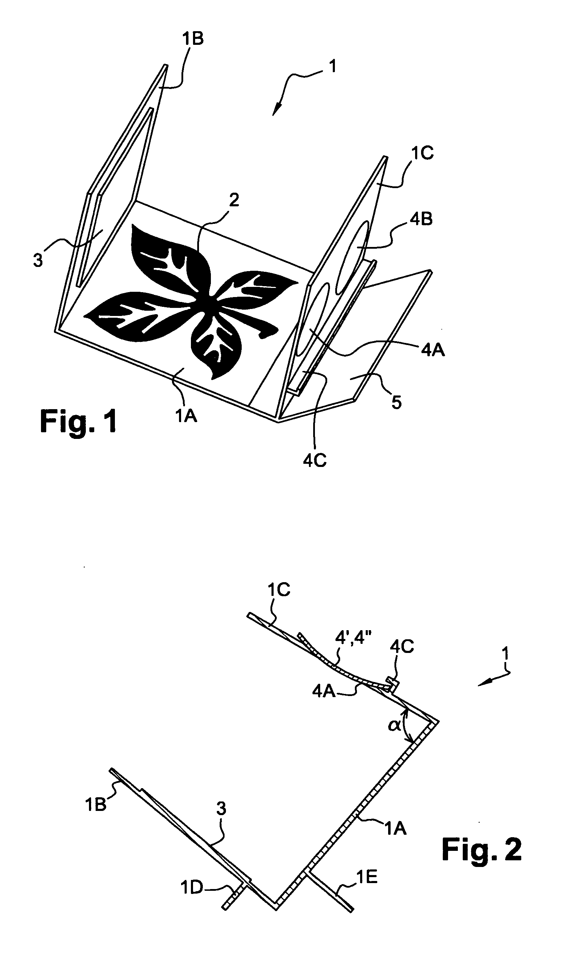

Les figures 1 et 2 illustrent un dispositif 1 de démonstration et de test de la qualité d'un traitement antireflet d'une lentille ophtalmique conforme à un premier mode de réalisation de l'invention

Ce dispositif 1 comporte une pièce en matière plastique transparente constituée d'un profilé en U, comportant une première face de support 1A d'une image 2 collée à cette face, une deuxième face de support 1B d'un miroir 3 sensiblement perpendiculaire à la première face 1A et formant une branche du profilé en U et une troisième face de positionnement 1C d'au moins une lentille ophtalmique 4', 4", située en face de la deuxième face 1B, formant la seconde branche du profilé en U et pourvue d'un agencement de positionnement de la lentille comprenant au moins un orifice, ici deux orifices agencés 4A, 4B sur cette troisième face 1C et une cornière de pose 4C agencée sous les orifices 4A, 4B agencés sur la troisième face.

Ces orifices 4A, 4B sont circulaires et ont un diamètre d'environ 50 mm.

La troisième face 1C est dépolie, afin d'éviter des reflets parasites sur le miroir 3.

La troisième face 1C est inclinée d'un angle α d'environ 80° par rapport à la première face 1A. La deuxième face 1B et la troisième face 1C sont distantes d'une distance comprise entre 15 et 30 cm et de préférence de 17 cm.

Ce dispositif 1 comporte également un cache 5 solidaire de la troisième face 1C et destiné à fournir un fond d'observation uniforme des reflets. Ce cache 5 est une paroi plane opaque, de préférence noire et mate, pivotante autour du côté commun de la première face 1A et de la troisième face 1C.

La pièce 1 comporte également de préférence deux pieds 1D, 1E assurant son inclinaison à 45° comme illustré sur la figure 2, afin d'assurer un positionnement confortable par rapport à un observateur, quand elle est posée sur une surface horizontale.

L'image 2 présente un fond blanc et mat et au moins un motif noir et mat, d'un contraste de 100%, de préférence un optotype correspondant à l'échelle 0,1 du test d'acuité Monoyer à 5 mètres.

L'utilisation d'un tel dispositif consiste à positionner une lentille 4' de puissance nulle, pourvue d'un premier traitement antireflet sur l'un des orifices 4A et une autre lentille 4" de puissance nulle, pourvue d'un second traitement antireflet sur l'autre des orifices 4B, avec leur face concave tournée vers l'extérieur, vers le haut, à regarder de façon binoculaire au travers des deux lentilles 4', 4" et à visualiser le reflet résultant sur le miroir 3, pour comparer le niveau de réflexion du reflet de l'image 2 réfléchie sur la face convexe de chacune des lentilles.

Le cache 5 est pivoté vers le haut de façon à occulter la partie basse, correspondante au reflet du visage de l'observateur, afin de fournir un fond d'observation uniforme. Ceci facilite l'observation des reflets.

Grâce au choix des dimensions de la pièce 1 et de l'image 2, le reflet de l'image 2 est de taille suffisante pour que l'observateur puisse comparer le reflet de l'image 2 réfléchie sur chacune des lentilles, le traitement antireflet de moindre efficacité présentant un reflet de cette image plus visible. Ce reflet perçu est ainsi d'une dimension de l'ordre de 1 à 3 cm.

L'agencement de positionnement de la lentille peut ne comprendre qu'un seul orifice sur la troisième face 1C.

L'utilisation du dispositif consiste alors à positionner une lentille de puissance nulle, pourvue sur une première moitié d'un premier traitement antireflet et pourvue sur une seconde moitié d'un second traitement antireflet, sur l'orifice, avec sa face concave tournée vers l'extérieur, vers le haut. La séparation entre les deux moitiés est positionnée verticalement par rapport au dispositif. L'observateur regarde à travers la lentille et visualise le reflet résultant à l'aide du miroir 3, pour comparer le niveau de réflexion du reflet, sur la face convexe de la lentille, de ladite image réfléchie sur la première moitié et sur la seconde moitié.

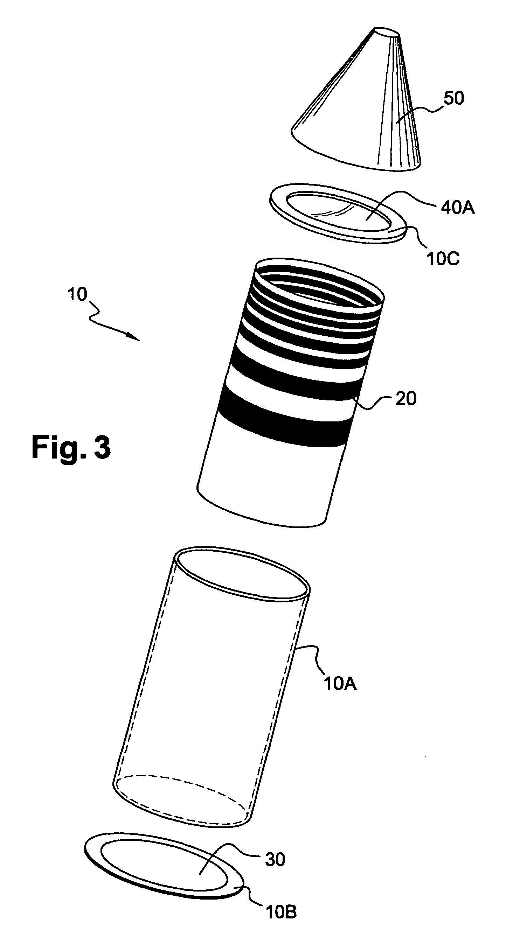

Les figures 3 à 5 illustrent un dispositif 10 de démonstration et de test de l'efficacité d'un traitement anti reflet d'une lentille ophtalmique conforme à un second mode de réalisation de l'invention.

Ce dispositif 10 comporte une pièce en matière plastique transparente constituée d'un cylindre fermé, comportant une première face de support 10A d'une image 20 collée à cette face, une deuxième face de support 10B d'un miroir 30 sensiblement perpendiculaire à la première face 10A et formant un disque de fond du cylindre et une troisième face de positionnement 10C d'une lentille ophtalmique 40, située en face de la deuxième face 10B, formant l'autre disque de fond du cylindre et pourvue d'un agencement de positionnement de la lentille comprenant un orifice 40A.

L'orifice 40A est circulaire et a un diamètre d'environ 50 mm

La longueur du cylindre est comprise entre 20 et 50 cm et de préférence égale à 30 cm.

Ce dispositif 10 comporte également un cache 50 solidaire de la troisième face 10C et destiné à fournir un fond d'observation uniforme. Ce cache 50 est une paroi conique ouverte opaque, de préférence noire et mate, solidarisable sur la troisième face 10C. Ce cache peut aussi se présenter sous la forme d'un cache plan percé en son centre d'un orifice d'environ 2 cm.

L'image 20 présente un fond blanc et mat et au moins un motif noir et mat, d'un contraste de 100%, de préférence constitué d'un ensemble de rayures parallèles annulaires correspondantes à des sections transversales du cylindre et d'épaisseur dégradée.

L'utilisation d'un tel dispositif consiste à positionner une lentille 40 de puissance nulle, pourvue sur une première moitié d'un premier traitement antireflet et pourvue sur une seconde moitié d'un second traitement antireflet, sur l'orifice 40A, avec sa face concave tournée vers l'extérieur, vers le haut, à regarder de façon monoculaire au travers de la lentille 40A et à visualiser le reflet résultant sur le miroir 30, pour comparer le niveau de réflexion du reflet, sur la face convexe de la lentille, de ladite image réfléchie sur la première moitié et sur la seconde moitié.

Le cache 50 est solidarisé à la troisième face 10C de façon à fournir un fond d'observation uniforme.

Grâce au choix des dimensions de la pièce 10 et de l'image 20, le reflet de l'image 20 est de taille suffisante pour que l'observateur puisse comparer le reflet de l'image 20 réfléchie sur chacune des moitiés de la lentille, le traitement antireflet de moindre efficacité présentant un reflet de cette image plus visible.

L'utilisation est effectuée dans un environnement bien éclairé, de préférence la lumière du jour.

Les modes de réalisation décrits comportent une image 2, 20 plane mais cette dernière peut être remplacée par un objet tridimensionnel.

Cette image ou cet objet est centré sur le plan de symétrie contenant le centre de l'orifice de positionnement de la lentille, quand ce dernier est unique, ou le point milieu entre les deux orifices, quand ceux-ci sont deux.

Le miroir 3, 30 est un miroir plan, de préférence de forme symétrique carré ou rond. Il est centré sur l'orifice de positionnement de la lentille, quand ce dernier est unique, ou sur le point milieu entre les deux orifices, quand ceux-ci sont deux.

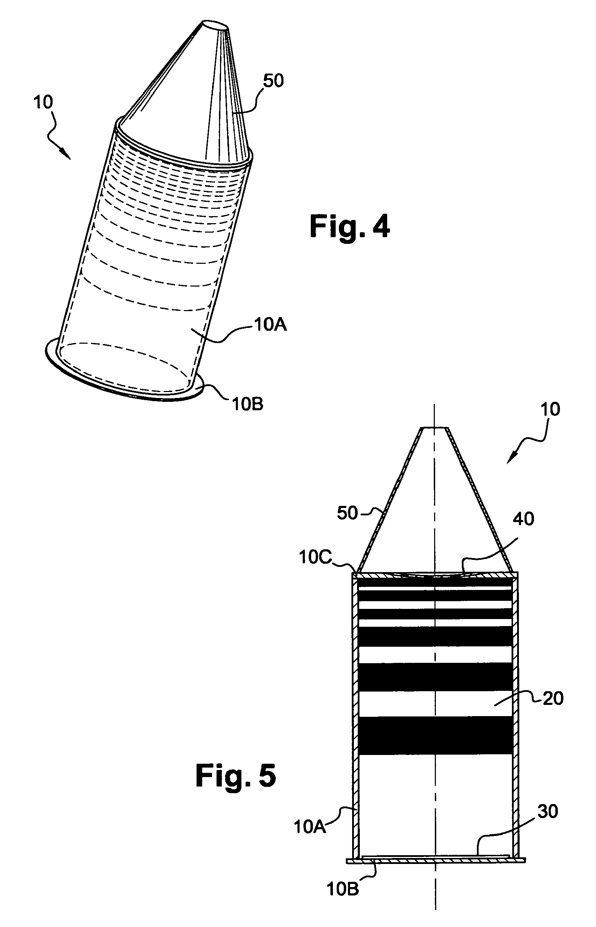

Le miroir n'est pas adjacent à l'objet ou à l'image, afin d'éviter un reflet direct de cet objet ou cette image sur le miroir. Le miroir 3 ne recouvre pas toute la première face 1B comme bien visible sur la figure 1. Une surface nue d'une largeur d'environ 2,5 cm l'entoure. Le miroir 30, comme bien visible sur les figures 4 et 5, est sensiblement identique au diamètre interne du tube 10A et n'est pas adjacent à l'image 20. Une distance de 6 cm les sépare.

La ou les lentilles peuvent être posées sur la troisième face 1C, 10C comme précédemment décrits ou être solidarisées par exemple par collage sur cette face.

Afin de ne pas perturber la visualisation au travers de ou des lentilles, cette ou ces dernières sont de préférence afocale planosphérique.

Lorsque le dispositif assure l'utilisation de deux lentilles, ces dernières sont de base identique et de même indice de réfraction.

## Revendications

1. Dispositif de démonstration et de test comparatif de l'efficacité d'un traitement antireflet d'une lentille ophtalmique comportant une image (2, 20) et un miroir (3, 30), **caractérisé en ce qu'**il comporte une pièce (1, 10) comportant une première face de support (1A, 10A) de ladite image (2, 20), une deuxième face de support (1B, 10B) du dit miroir (3, 30) sensiblement perpendiculaire à ladite première face et une troisième face de positionnement (1C, 10C) d'au moins une lentille ophtalmique, située en face de ladite deuxième face et pourvue d'un agencement de positionnement de ladite lentille (4', 4", 40) comprenant au moins un orifice (4A, 4B, 40A) agencé sur ladite troisième face, en face dudit miroir de sorte que, lorsqu'un utilisateur regarde au travers dudit orifice, il visualise le reflet résultant de ladite image sur ladite lentille au moyen dudit miroir (3, 30).

2. Dispositif selon la revendication précédente, **caractérisé en ce qu'**il comporte un cache (5, 50) solidaire de ladite troisième face (1C, 10C) et destiné à fournir un fond d'observation uniforme des reflets.

3. Dispositif selon l'une des revendications précédentes, **caractérisé en ce que** ladite image (2, 20) est une image présentant un fond blanc et mat et au moins un motif noir et mat.

4. Dispositif selon l'une des revendications 1 à 3, **caractérisé en ce que** ladite pièce (1) est un profilé en U, dont les branches sont constituées de ladite deuxième (1B) face et de ladite troisième (1C) face.

5. Dispositif selon la revendication précédente, **caractérisé en ce que** ladite troisième face (1C) est inclinée d'un angle d'environ 80° par rapport à la première face (1A).

6. Dispositif selon la revendication 4 ou 5, **caractérisé en ce que** ladite deuxième face (1A) et ladite troisième face (1C) sont distantes d'une distance comprise entre 15 et 30 cm.

7. Dispositif selon l'une des revendications 4 à 6, **caractérisé en ce que** ledit agencement de positionnement de la lentille comprend une cornière de pose (4C) agencée sous ledit orifice (4A, 4B) agencé sur ladite troisième face (1C).

8. Dispositif selon la revendication 2 et l'une des revendications 4 à 7, **caractérisé en ce que** ledit cache (5) est une paroi plane opaque pivotante autour du côté commun de la première face (1A) et de la troisième face (1C).

9. Dispositif selon la revendication 3 et l'une des revendications 4 à 8, **caractérisé en ce que** ladite image (2) est un optotype correspondant à l'échelle 0,1 du test d'acuité Monoyer à 5 mètres.

10. Dispositif selon l'une des revendications 1 à 3, **caractérisé en ce que** ladite pièce (10) est un cylindre fermé, dont les disques de fond constituent ladite deuxième face (10B) et ladite troisième face (10C).

11. Dispositif selon la revendication précédente, **caractérisé en ce que** la longueur du dit cylindre est comprise entre 20 et 50 cm.

12. Dispositif selon la revendication 2 et l'une des revendications 10 à 11, **caractérisé en ce que** ledit cache (50) est une paroi conique ouverte opaque solidarisable sur la troisième face (10C).

13. Dispositif selon la revendication 3 et l'une des revendications 10 à 12, **caractérisé en ce que** ladite image (20) est constituée d'un ensemble de rayures parallèles annulaires correspondantes à des sections transversales du dit cylindre.

14. Dispositif selon l'une des revendications précédentes, **caractérisé en ce que** ladite pièce (1, 10) est en matière plastique transparente.

15. Dispositif selon la revendication précédente, **caractérisé en ce que** ladite troisième face (1C, 10C) est dépolie.

16. Utilisation d'un dispositif selon l'une des revendications précédentes, **caractérisée en ce qu'**elle consiste à positionner une lentille (40) pourvue sur une première moitié d'un premier traitement antireflet et pourvue sur une seconde moitié d'un second traitement antireflet, sur ledit orifice (4A, 40), avec sa face concave tournée vers l'extérieur, à regarder de façon monoculaire au travers de la lentille et à visualiser le reflet résultant sur ledit miroir (3, 30), pour comparer le niveau de réflexion du reflet de ladite image réfléchie sur ladite première moitié et sur ladite seconde moitié.

17. Utilisation d'un dispositif selon l'une des revendications 1 à 9 et comportant deux dits orifices, **caractérisée en ce qu'**elle consiste à positionner une lentille (4') pourvue d'un premier traitement antireflet sur l'un des orifices (4A) et une autre lentille (4") pourvue d'un second traitement antireflet sur l'autre des orifices (4B), avec leur face concave tournée vers l'extérieur, à regarder de façon binoculaire au travers des deux lentilles et à visualiser le reflet résultant à l'aide dudit miroir (3), pour comparer le niveau de réflexion du reflet de ladite réfléchie sur chacune des lentilles.

18. Utilisation selon la revendication 16 ou 17 d'un dispositif selon la revendication 8, **caractérisée en ce que** ledit cache (5) est pivoté vers le haut de façon à obtenir un fond d'observation uniforme.

19. Utilisation selon la revendication 16 ou 17 d'un dispositif selon la revendication 12, **caractérisée en ce que** ledit cache (50) est solidarisé à ladite troisième face.

## Claims

1. A device for demonstrating and testing, comparatively, the efficacy of an antireflection treatment of an ophthalmic lens comprising an image (2, 20) and a mirror (3, 30), **characterized in that** it comprises a piece (1, 10) comprising a first face (1A, 10A) for supporting said image (2, 20), a second face (1B, 10B) for supporting said mirror (3, 30) substantially perpendicular to said first face, and a third face (1C, 10C) for positioning at least one ophthalmic lens, situated across from said second face and provided with an arrangement for positioning said lens (4', 4", 40) comprising at least one orifice (4A, 4B, 40A) arranged on said third face, across from said mirror such that, when a user looks through said orifice, he views the reflection resulting from said image on said lens by means of said mirror (3, 30).

2. The device according to the preceding claim, **characterized in that** it includes a cover (5, 50) secured on said third face (1C, 10C) and designed to provide a uniform observation background for the reflections.

3. The device according to one of the preceding claims, **characterized in that** said image (2, 20) is an image with a matte white background and at least one matte black pattern.

4. The device according to one of claims 1 to 3, **characterized in that** said piece (1) has a U-shaped profile, the branches of which are formed by said second face (1B) and said third face (1C).

5. The device according to the preceding claim, **characterized in that** said third face (1C) is inclined by an angle of approximately 80° relative to the first face (1A).

6. The device according to claim 4 or 5, **characterized in that** said second face (1A) and said third face (1C) are separated by a distance comprised between 15 and 30 cm.

7. The device according to one of claims 4 to 6, **characterized in that** said positioning arrangement of the lens comprises a placement angle (4C) arranged under said orifice (4A, 4B) arranged on said third face (1C).

8. The device according to claim 2 and one of claims 4 to 7, **characterized in that** said cover (5) is an opaque planar wall pivoting around the shared side of the first face (1A) and the third face (1C).

9. The device according to claim 3 and one of claims 4 to 8, **characterized in that** said image (2) is an optotype corresponding to scale 0.1 of the Monoyer acuity test at 5 m.

10. The device according to one of claims 1 to 3, **characterized in that** said piece (10) is a closed cylinder, the bottom discs of which constitute said second face (10B) and said third face (10C).

11. The device according to the preceding claim, **characterized in that** the length of said cylinder is comprised between 20 and 50 cm.

12. The device according to claim 2 and one of claims 10 to 11, **characterized in that** said cover (50) is an opaque open conical wall that can be secured on the third face (10C).

13. The device according to claim 3 and one of claims 10 to 12, **characterized in that** said image (20) is made up of a set of annular parallel stripes corresponding to transverse sections of said cylinder.

14. The device according to one of the preceding claims, **characterized in that** said piece (1, 10) is made from a transparent plastic material.

15. The device according to the preceding claim, **characterized in that** said third face (1C, 10C) is frosted.

16. A use of a device according to one of the preceding claims, **characterized in that** it consists of positioning a lens (40), whereof a first half is provided with a first antireflection treatment and a second half is provided with a second antireflection treatment, on said orifice (4A, 40), with its concave face turned outward, looking through the lens in a monocular manner, and viewing the resulting reflection on said mirror (3, 30), to compare the reflection level of the reflection of said image reflected on said first half and said second half.

17. A use of a device according to one of claims 1 to 9 and including two said orifices, **characterized in that** it consists of positioning a lens (4') provided with a first antireflection treatment on one of the orifices (4A) and another lens (4") provided with a second antireflection treatment on the other of the orifices (4B), with their concave face turned outward, looking through the two lenses in a binocular manner, and viewing the resulting reflection using said mirror (3), to compare the reflection level of the reflection of said reflected on each of the lenses.

18. The use according to claim 16 or 17 of the device according to claim 8, **characterized in that** said cover (5) is pivoted upward so as to obtain a uniform observation background.

19. The use according to claim 16 or 17 of the device according to claim 12, **characterized in that** said cover (50) is secured to said third face.

## Patentansprüche

1. Vorrichtung zum Nachweis und vergleichenden Test der Wirksamkeit einer Entspiegelungsbehandlung einer ophtalmischen Linse, die ein Bild (2, 20) und einen Spiegel (3, 30) aufweist, **dadurch gekennzeichnet, dass** sie ein Teil (1, 10) aufweist, das eine erste Trägerfläche (1A, 10A) des Bilds (2, 20), eine zweite, zur ersten Fläche etwa senkrechte Trägerfläche (1B, 10B) des Spiegels (3, 30) und eine dritte Positionierungsfläche (1C, 10C) mindestens einer ophtalmischen Linse aufweist, die sich gegenüber der zweiten Fläche befindet und mit einer Positionierungsanordnung der Linse (4', 4", 40) ausgestattet ist, die mindestens eine Öffnung (4A, 4B, 40A) umfasst, die auf der dritten Fläche gegenüber dem Spiegel derart ausgebildet ist, dass, wenn ein Benutzer durch diese Öffnung blickt, er das Spiegelbild visualisiert, das von dem Bild mittels des Spiegels (3, 30) auf der Linse resultiert.

2. Vorrichtung nach vorangehendem Anspruch, **dadurch gekennzeichnet, dass** sie eine mit der dritten Fläche (1C, 10C) verbundene Abdeckung (5, 50) aufweist, die dazu bestimmt ist, einen einheitliche Beobachtungshintergrund der Spiegelbilder bereitzustellen.

3. Vorrichtung nach einem der vorangehenden Ansprüche, **dadurch gekennzeichnet, dass** das Bild (2, 20) ein Bild ist, das einen weißen und matten Hintergrund und mindestens ein schwarzes und mattes Motiv aufweist.

4. Vorrichtung nach einem der Ansprüche 1 bis 3, **dadurch gekennzeichnet, dass** das Teil (1) ein U-Profil ist, dessen Schenkel von der zweiten Fläche (1B) und von der dritten Fläche (1C) gebildet werden.

5. Vorrichtung nach vorangehendem Anspruch, **dadurch gekennzeichnet, dass** die dritte Fläche (1C) in einem Winkel von zirka 80° im Verhältnis zur ersten Fläche (1A) geneigt ist.

6. Vorrichtung nach Anspruch 4 oder 5, **dadurch gekennzeichnet, dass** die zweite Fläche (1A) und die dritte Fläche (1C) in einem Abstand zwischen 15 und 30 cm inklusive beabstandet sind.

7. Vorrichtung nach einem der Ansprüche 4 bis 6, **dadurch gekennzeichnet, dass** die Positionierungsanordnung der Linse ein Aufstellungs-Winkelprofil (4C) umfasst, das unter der Öffnung (4A, 4B), die auf der dritten Fläche (1C) ausgebildet ist, ausgebildet ist.

8. Vorrichtung nach Anspruch 2 und einem der Ansprüche 4 bis 7, **dadurch gekennzeichnet, dass** die Abdeckung (5) eine undurchsichtige ebene Wand ist, die um die gemeinsame Kante der ersten Fläche (1A) und der dritten Fläche (1C) schwenkt.

9. Vorrichtung nach Anspruch 3 und nach einem der Ansprüche 4 bis 8, **dadurch gekennzeichnet, dass** das Bild (2) ein Optotyp ist, der in 5 Metern der Skala 0,1 des Monoyer-Sehtests entspricht.

10. Vorrichtung nach einem der Ansprüche 1 bis 3, **dadurch gekennzeichnet, dass** das Teil (10) ein geschlossener Zylinder ist, deren Bodenscheiben die zweite Fläche (10B) und die dritte Fläche (10C) bilden.

11. Vorrichtung nach vorangehendem Anspruch, **dadurch gekennzeichnet, dass** die Länge des Zylinders zwischen 20 cm und 50 cm inklusive ist.

12. Vorrichtung nach Anspruch 2 und einem der Ansprüche 10 bis 11, **dadurch gekennzeichnet, dass** die Abdeckung (50) eine undurchsichtige offene konische Wand ist, die mit der dritten Fläche (10C) verbindbar ist.

13. Vorrichtung nach Anspruch 3 und einem der Ansprüche 10 bis 12, **dadurch gekennzeichnet, dass** das Bild (20) von einer Gruppe ringförmiger paralleler Streifen gebildet wird, die Profilschnitten des Zylinders entsprechen.

14. Vorrichtung nach einem der vorangehenden Ansprüche, **dadurch gekennzeichnet, dass** das Teil (1, 10) aus durchsichtigem Kunststoff ist.

15. Vorrichtung nach vorangehendem Anspruch, **dadurch gekennzeichnet, dass** die dritte Fläche (1C, 10C) mattiert ist.

16. Verwendung einer Vorrichtung nach einem der vorangehenden Ansprüche, **dadurch gekennzeichnet, dass** sie darin besteht, eine Linse (40), die auf einer ersten Hälfte mit einer ersten Entspiegelungsbehandlung versehen ist und auf einer zweiten Hälfte mit einer zweiten Entspiegelungsbehandlung versehen ist, mit ihrer nach außen gedrehten konkaven Fläche auf der Öffnung (4A, 40) zu positionieren, monokular durch die Linse zu blicken und das resultierende Spiegelbild auf den (3, 30) zu betrachten, um das Reflexionsniveau des Spiegelbilds des auf der ersten Hälfte und der zweiten Hälfte widergespiegelten Bilds zu vergleichen.

17. Verwendung eine Vorrichtung nach einem der Ansprüche 1 bis 9 und die zwei genannte Öffnungen aufweist, **dadurch gekennzeichnet, dass** sie darin besteht, eine Linse (4') mit einer ersten Entspiegelungsbehandlung auf einer der Öffnungen (4A) zu positionieren und eine andere Linse (4") mit einer zweiten Entspiegelungsbehandlung auf der anderen der Öffnungen (4B) zu positionieren, mit ihrer nach außen gedrehten konkaven Fläche, binokular durch die zwei Linsen zu blicken und das resultierende Spiegelbild mit Hilfe des Spiegels (3) zu betrachten, um das Reflexionsniveau des Spiegelbilds des auf jeder der Linsen widergespiegelten Bilds zu vergleichen.

18. Verwendung nach Anspruch 16 oder 17 einer Vorrichtung nach Anspruch 8, **dadurch gekennzeichnet, dass** die Abdeckung (5) derart nach oben geschwenkt ist, um einen einheitlichen Beobachtungshintergrund zu erhalten.

19. Verwendung nach Anspruch 16 oder 17 einer Vorrichtung nach Anspruch 12, **dadurch gekennzeichnet, dass** die Abdeckung (50) mit der dritten Fläche verbunden ist.
